Europäisches Patentamt

European Patent Office

Office européen des brevets

(19)

(11) Publication number: **0 089 047**
**B1**

(12) **EUROPEAN PATENT SPECIFICATION**

(45) Date of publication of patent specification: **23.07.86**

(21) Application number: **83102500.2**

(22) Date of filing: **14.03.83**

(51) Int. Cl.⁴: **B 29 C 49/42**, B 29 C 49/06,
B 29 C 45/26

(54) **Transport neck ring.**

(30) Priority: **15.03.82 US 358137**

(43) Date of publication of application:
**21.09.83 Bulletin 83/38**

(45) Publication of the grant of the patent:
**23.07.86 Bulletin 86/30**

(84) Designated Contracting States:
**DE FR GB**

(56) References cited:
**US-A-2 331 702
US-A-3 172 929
US-A-3 412 188
US-A-3 850 562
US-A-4 004 872
US-A-4 151 247**

(73) Proprietor: **HOOVER UNIVERSAL, INC
825, Victors Way
Ann Arbor Michigan 48104 (US)**

(72) Inventor: **Dunas, Dennis L.
400 Willow Way Lee's Summit
Missouri 64063 (US)**
Inventor: **Myers, William H.
9708 East 85th Street Raytown
Missouri 64318 (US)**
Inventor: **Kinslow, William G., Jr.
2 Northwest 69th Street Gladstone
Missouri 64118 (US)**

(74) Representative: **Sandmair, Kurt, Dr. et al
Patentanwälte Schwabe, Sandmair, Marx
Stuntzstrasse 16
D-8000 München 80 (DE)**

Courier Press, Leamington Spa, England.

## Description

In the formation of thermoplastic containers it is oftentimes advantageous to form the containers using a multiple step process and apparatus. In U.S. 2,331,702; U.S. 3,172,929; U.S. 3,412,188; U.S. 3,850,562 and U.S. 4,151,247 (to which relates the pre-characterising part of claim 1) two principal steps are used, i.e. a preform is made by injection molding and the injection molded preform is blow-molded to yield the final product. Some of the processes and apparatuses described in these patents utilize additional temperature conditioning steps between the injection molding step and the blow-molding step.

A different type of process and apparatus is described in U.S. 4,004,872. This patent teaches that containers can be formed by the utilization of a three step process, i.e. extrusion of a parison, pre-blowing of the parison to a shape similar to but smaller than the desired final shape and blowing the pre-blown parison to the final shape. Additional steps may be utilized between the pre-blow and the final-blow steps.

Irrespective of the type of multistage process used it is necessary to transport the injection formed preform or the pre-blown parison from its formation station to the blow molding station and to all other ancillary stations therebetween. As can be seen from the above mentioned patents it is well known to affect such transport attaching the preform or pre-blown parison at a point adjacent its neck to a powered apparatus which moves the attached preform or pre-blown parison from station to station.

Special concern about the attaching systems used by multi-step apparatuses has been raised by the carbonated beverage industry whose use of thermoplastic containers has soared to hundreds of millions of containers per year. This industry needs a container with a neck which has an interior wall adjacent the neck which is as smooth as possible and which has an undistorted well-defined neck thread. A smooth interior neck wall is desirable to accommodate the high speed fill lines used today while a high quality thread is needed to insure high fidelity in fitment of a closure to the threaded container neck.

Therefore, it is an object of this invention to provide a neck ring, associated with a transport mechanism, for achieving attachment of a parison or pre-blow preform without affecting neck thread quality and the smoothness of the interior neck wall.

This invention relates to a unique carrier ring for achieving attachment to a thermoplastic preform as the preform is formed in a split injection mold. The carrier ring is in association with a powered transport system for the movement of the carrier ring and its attached preform to and from the various stations found on multi-station container forming apparatuses. The carrier ring is positioned adjacent the split injection mold during the injection formation of the preform. The split injection mold defines an injection mold cavity into which a core pin is positionable to define the principal portion of a preform cavity. The carrier ring is annular in shape and has a bore dimension for passage and seating of the core pin. The carrier ring has, at its inner in use lowermost extent, an annular groove which defines the remaining portion of the preform cavity. The annular groove is utilized for obtaining the beforementioned attachment between the carrier ring and the preform. The annular groove is characterized in that it has a substantially in use horizontal outwardly extending first wall which defines a portion of the upper surface of the preform cavity. In addition to this first wall there is provided a substantially horizontal outwardly extending second wall which is downwardly displaced from the first wall. Connecting the first wall to the second wall is a downwardly and inwardly extending third wall which emanates from the outward most extent of the first wall and terminates at the inward most extent of the second wall. By utilizing such a configured annular groove and by having the annular groove define a portion of the preform cavity, the attachment between the preform and the carrier ring is effected. This attachment can best be described as an interference fit between the ring and the preform as the second wall is in an undercut relationship with the preform. This relationship provides sturdy enough attachment between the ring and the preform so that the preform can be successfully moved from station to station and undergo operations at the various stations without loss of the attachment between the ring and the preform. Another quality of the attachment achieved by the specially designed annular groove is that while, being sturdy enough to effect the attaching function, it must still allow for removal of the blown preform from the carrier ring. Generally speaking this removal is easily accomplished by stripping the blown preform from the carrier ring. Therefore the annular groove utilized by the carrier ring of this invention has to allow for release of the attachment under stripping forces which are commonly used on multi-station injection-blow molding apparatus.

These and other features of this invention contributing to satisfaction in use and economy of manufacture will be more fully understood from the following description of a preferred embodiment and the accompanying drawings in which identical numerals refer to identical parts and in which:

FIGURE 1 is a sectional view taken through a split injection mold showing a carrier ring of this invention and a core pin in their position during injection forming of a preform; and

FIGURE 2 is an enlarged view of the upper righthand corner of the preform as shown in FIGURE 1.

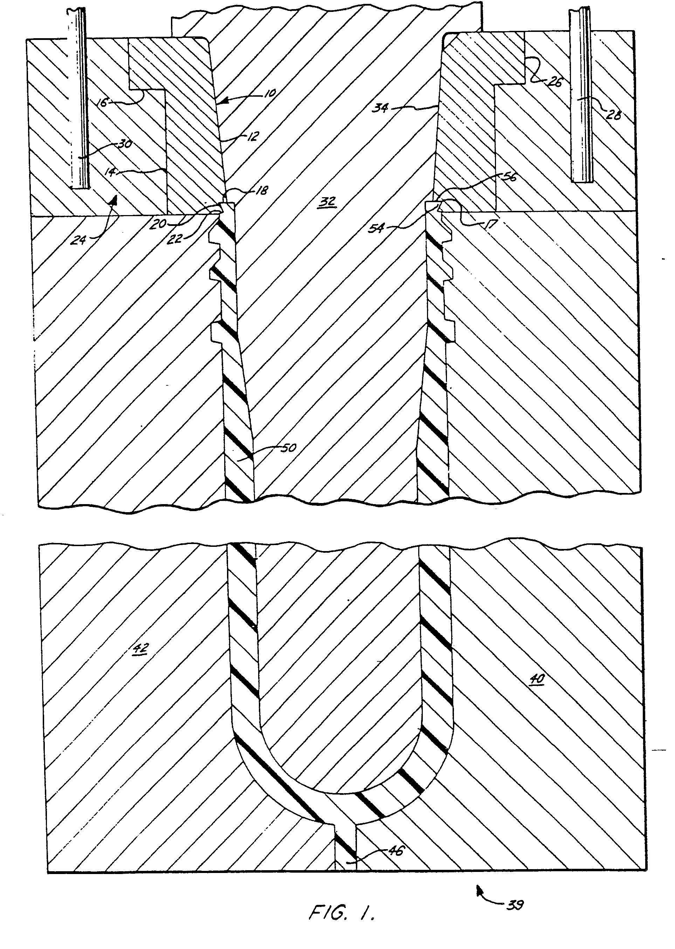

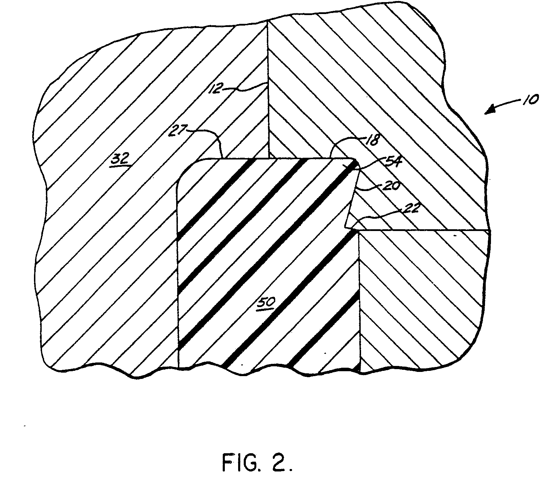

Referring now to FIGURES 1—2 there can be seen a carrier ring of this invention generally designated by the numeral 10 as it would be used in association with a split injection mold, generally designated by the numeral 39 and a core pin, generally designated by the numeral 32. The split injection mold 39 is comprised of two mold halves designated by the numerals 40 and 42 in FIGURE 1. An injection nozzle fits into injection nozzle cavity 46 provided by mold halves 40 and 42. Core pin 32 is positionable within the mold cavity so that it and the mold cavity define the principal part of the preform cavity.

Positioned at the upper most extent of split injection mold 39 is carrier ring 10. Carrier ring 10 has a tapered bore defined by inside wall 12 which allows for passage of core pin 32 and which effects aligned seating of the core pin 32 when it is in its lowered position within the injection mold cavity. (Core pin 32 has a similar tapered portion 34 for cooperation with inside wall 12 to achieve the aligned seating).

Carrier ring 10 nests within annular collar 24. Annular collar 24 is attached to a power transport mechanism by way of connecting rods 28 and 30. Carrier ring 10 has a circular outside surface 14 having a diameter snugly fitable within the bore of annular collar 24. to aid in the nesting relationship between annular collar 24 and carrier ring 10 there is provided annular collar recess 26 in annular collar 24. Fitable within this annular recess is carrier ring flange 16.

As mentioned previously and as can be seen in FIGURE 1, core pin 32 and the injection mold cavity defined by injection mold halves 40 and 42, almost completely define the injection mold cavity. The only portion of the injection mold cavity not defined by the core pin and the mold halves is located at the uppermost portion of the injection mold cavity. Here it can be seen that carrier ring 10 at its lower-innermost extent has annular groove 17 which is defined by an outwardly extending first wall 18, inwardly extending second wall 22 and inwardly and downwardly extending wall 20. Preferably outwardly extending first wall 18 has a length within the range of 0.05 centimeters to 0.254 centimeters and the outwardly extending second wall 22 has a length within the range from 0.0127 centimeters to 0.0762 centimeters. The angle which inwardly and downwardly extending wall 20 makes with´ a plane perpendicular to the center axis of the carrier ring is within the range of from 50 to 80 degrees. From both the figures it can be easily appreciated how carrier ring 10 achieves the interference fit with injection molded preform 50. As can be seen, outwardly extending second wall 22 and downwardly and inwardly extending wall 20 provide for an interference fit due to the undercut position of the intersection of these two walls. It is also noted that outwardly extending wall 18 forms a portion 56 of the uppermost surface of preform cavity thereby assuring that preform 50 at its uppermost outside extent 54 will extend outwardly of the intersection between walls 20 and 22. The remaining portion 27 of the uppermost surface of preform 50 is formed by an annular lip on core pin 32.

## Claims

1. A carrier ring (10) for achieving attachment to a plastic preform (50) as said preform is formed in a split injection mold (39) into which a core pin (32) is positionable to define together with the injection mold the principal portion of a preform cavity, said carrier ring (10) having an annular bore dimensioned for passage and seating of said core pin (32), and wherein subsequent to the formation of said thermoplastic preform (50), said carrier ring (10) maintains said attachment to said preform (50) even after said core pin (32) is removed from said injection mold cavity and said preform (50) is removed from said split injection mold (39), characterized in that the carrier ring (10) has at its inner in use lowermost extent an annular groove (17) which defines the remaining portion of said preform cavity, said annular groove having:

a) a substantially in use horizontal outwardly extending first wall (18) which defines a portion (56) of the upper surface of said preform cavity;

b) a substantially outwardly extending second wall (22) downwardly_displaced from said first wall (18); and

c) a downwardly and inwardly extending third wall (20) emanating from the outward most extent (54) of said first wall (18) and terminating at the inward most extent of said second wall.

2. The carrier ring (10) of claim 1 further characterized by said first wall (18) having a length within the range from 0.05 to 0.254 centimeters and said second wall (22) having a length within the range from 0.0127 to 0.0762 centimeters.

3. The carrier ring (10) of claim 2 further characterized by said third wall (20) defining an angle within the range from 50 to 80 degrees with respect to a plane perpendicular to the center axis of said carrier ring (10).

4. The carrier ring (10) of claims 1, 2 or 3 further characterized by said carrier ring (10) being downwardly depending from a power transport mechanism for moving said carrier ring (10) and the attached preform (50) from an area of said split injection mold (39) after said core pin (32) is removed from said injection mold cavity and the split injection mold (39) is opened.

## Revendications

1. Bague support (10) pour obtenir la fixation à une préforme en plastique (50), au moment où ladite préforme est formée dans un moule à injection fendu (39), à l'intérieur duquel un noyau allongé (32) peut être positionné pour définir avec le moule à injection la partie principale d'une cavité préformée, ladite bague support (10) ayant un alésage annulaire de dimensions permettant le passage et la mise en place dudit noyau allongé (32), et dans laquelle, après la formation de ladite préforme thermoplastique (50), ladite bague support (10) maintient ladite fixation à ladite préforme (50) même après que ledit noyau allongé (32) ait été retiré de ladite cavité du moule à injection et que ladite préforme (50) ait été retirée du moule à injection fendu (39), caractérisée par le fait que la bague support (10) a, à son extrémité intérieure la plus basse en service, une rainure annulaire (17) qui définit la portion restante de ladite cavité préformée, ladite rainure annulaire comprenant:

a) une première paroi (18) s'étendant vers l'extérieur sensiblement en position horizontale en service qui définit une portion (56) de la surface supérieure de ladite cavité préformée;

b) une seconde paroi (22) s'étendant sensiblement en direction de l'extérieur, déplacée vers le bas par rapport à ladite première paroi (18); et

c) une troisième paroi (20) orientée vers le bas et vers l'intérieur sortant du prolongement le plus extérieur (54) de ladite première paroi (18) et se terminant sur la partie la plus intérieure de ladite seconde paroi.

2. Bague support (10) selon la revendication 1, caractérisée encore par le fait que ladite première paroi (18) a une longueur comprise dans la gamme allant de 0,05 à 0,254 centimètres et que la seconde paroi (22) a une longueur située dans la gamme allant de 0,0127 à 0,0762 centimètres.

3. Bague support (10) selon la revendication 2, caractérisée encore par le fait que ladite troisième paroi (20) définit un angle compris dans la gamme allant de 50 à 80 degrés par rapport à un plan perpendiculaire à l'axe central de ladite bague support (10).

4. Bague support (10) selon les revendications 1, 2 ou 3, caractérisée encore par le fait que ladite bague support (10) est suspendu vers le bas à un mécanisme de transport à moteur pour déplacer ladite bague support (10) et la préforme qui lui est fixée (50) par rapport à une zone dudit moule fendu à injection (39) lorsque ledit noyau allongé (32) est retiré de ladite cavité du moule à injection et que le moule à injection fendu (39) est ouvert.

**Patentansprüche**

1. Trägerring (10) zur Anbringung an einem Vorformling (50) aus Kunststoff bei der Herstellung dieses Vorformlings in einem mehrteiligen Spritzwerkzeug (39), in dem ein Kernstift (32) positioniert werden kann, um zusammen mit dem Spritzwerkzeug den Hauptteil des Hohlraums für den Vorformling zu bilden, wobei der Trägerring (10) eine ringförmige Bohrung aufweist, die für den Durchgang und den Sitz des Kernstiftes (32) dimensioniert ist, und wobei im Anschluß an die Herstellung des thermoplastischen Vorformlings (50) der Trägerring (10) sogar nach der Entnahme des Kernstiftes (32) aus dem Hohlraum des Spritzwerkzeuges und der Entnahme des Vorformlings (50) aus dem mehrteiligen Spritzwerkzeug (39) die Anbringung an dem Vorformling (50) beibehält, dadurch gekennzeichnet, daß der Trägerring (10) an seinem inneren, bei seiner Benutzung untersten Bereich eine ringförmige Nut (17) aufweist, die den verbleibenden Teil des Hohlraums für den Vorformling bildet, wobei die ringförmige Nut die folgenden Merkmale aufweist:

a) eine sich beim Gebrauch im wesentlichen horizontal nach außen erstreckende erste Wand (18), die einen Bereich (56) der oberen Oberfläche des Hohlraums für den Vorformling definiert;

b) eine sich im wesentlichen nach außen erstreckende zweite Wand (22), die gegenüber der ersten Wand (18) nich unten verschoben ist; und

c) eine sich nach unten und nach innen erstreckende dritte Wand (20), die von dem am weitesten außen liegenden Bereich (54) der ersten Wand (18) ausgeht und an dem am weitesten innen liegenden Bereich der zweiten Wand endet.

2. Trägerring (10) nach Anspruch 1, dadurch gekennzeichnet, daß die erste Wand (18) eine Länge im Bereich von 0,05 bis 0,254 cm und die zweite Wand (22) eine Länge im Bereich von 0,0127 bis 0,0762 cm haben.

3. Trägerring (10) nach Anspruch 2, dadurch gekennzeichnet, daß die dritte Wand (20) einen Winkel im Bereich von 50 bis 80° in Bezug auf eine Ebene bildet, die senkrecht zur Mittelachse des Trägerrings (10) verläuft.

4. Trägerring (10) nach Anspruch 1, 2 oder 3, dadurch gekennzeichnet, daß der Trägerring (10) von einem Krafttransportmechanismus zur Bewegung des Trägerrings (10) und des daran befestigten Vorformlings (50) aus einem Bereich des mehrteiligen Spritzwerkzeuges (39) nach der Entnahme des Kernstiftes (32) aus dem Hohlraum des Spritzwerkzeuges und dem öffnen des mehrteiligen Spritzwerkzeuges (39) nach unten ragt.

FIG. 1.

FIG. 2.